# EUROPEAN PATENT APPLICATION

(11) **EP 4 446 798 A1**
(43) Date of publication of application: **16.10.2024**
(21) Application number: 24169224.3
(22) Date of filing: 09.04.2024
(51) Int. Cl.: G02F 1/01

(54) **OPTICAL PHASE CHANGE APPARATUS AND METHOD OF CHANGING A PHASE OF AN OPTICAL SIGNAL**

(30) Priority: 11.04.2023 US 202363495312 P
(71) Applicant: Xanadu Quantum Technologies Inc., Toronto, Ontario M5G 2C8 (CA)
(72) Inventor: LAVOIE, Jonathan, Toronto (CA); YAN, Xiruo, Toronto (CA); NEUHAUS, Leonhard, Toronto (CA); SACKNIES SILVA M VILLALOBOS, Luiz, Toronto (CA)
(74) Representative: Hoyng Rokh Monegier B.V.

(57) **Abstract**

There is described an optical apparatus having an optical fiber link propagating an optical signal; a first device coupled with a first fiber portion of the link and configured for imparting a phase changing contribution thereto; and a second device coupled with a second fiber portion of the link and configured for imparting a phase changing contribution thereto, the second device operating within a second response frequency range having a maximum value greater than a maximum value of a first response frequency range of the first device; wherein, upon the optical signal experiencing a phase change including a frequency value greater than the first response frequency range, the first device imparts a first phase change at a first response frequency value within the first response frequency range, and the second device imparts a second phase change at a second response frequency value greater than the first response frequency range.

## Description

### CROSS-REFERENCE TO RELATED APPLICATIONS

This application claims the benefit of, and priority to, U.S. Provisional Patent Application No. 63/495,312, filed April 11, 2023 and titled "OPTICAL PHASE CHANGE APPARATUS AND METHOD OF CHANGING A PHASE OF AN OPTICAL SIGNAL," the entire contents of which are incorporated herein by reference for all purposes.

### FIELD

The improvements relate to quantum computing and more particularly to photonic fault-tolerant quantum computing systems.

### BACKGROUND

A quantum computer can theoretically perform some computations faster than the analogous classical computer. Yet, due to noise and decoherence of the quantum bits (qubits), a small physical error rate is inevitable. Applying quantum logic gates on these qubits can cause said physical errors to quickly spread throughout the quantum computing system. Therefore, even a small physical error rate could mean that quantum computers can only apply a certain number of logic gates to a set of qubits before a longer computation is destroyed by noise. Unexpectedly, the quantum fault-tolerance theorem shows that, if the physical error rate is below some threshold, an appropriate quantum error correction scheme can be used such that one can perform relatively long quantum computations with large numbers of quantum logic gates while maintaining arbitrarily low levels of logical errors.

Quantum computers that comply with the quantum fault-tolerance theorem are referred to as fault-tolerant quantum computing (FTQC) systems. The typical photonic FTQC system (i.e., an FTQC system in which the physical qubits are quantum states of light) includes three sub-systems: a preparation sub-system, a stitching sub-system, and a measurement sub-system. The preparation sub-system prepares one or more optical signals by imparting them with initial quantum states of light and can sometimes involve entangling said quantum states of light. For instance, the quantum states of light can include, but are not limited to, single-photon states, non-Gaussian states, squeezed states, squeezed vacuum states, Gottesman-Kitaev-Preskill (GKP) states, GKP magic states, and cat states, to name a few examples. The quantum state can be represented by a mathematical entity providing a probability distribution for the outcomes of each possible measurement on an optical signal. The stitching sub-system includes a number of optical components (e.g., beam splitters and phase shifters) that are configured to entangle the quantum states of light to form a lattice structure. The measurement sub-system then measures the quantum states of light in order to perform measurement-based quantum computation (MBQC).

These sub-systems and/or components within these sub-systems may be optically connected to one another via optical fiber links whose lengths and/or refractive indices can change due to environmental factors (e.g., temperature changes, vibrations). While such changes may be inconsequential in some optical applications, in photonic FTQC systems these changes can result in adverse effects such as drifts or otherwise changes of the phases of the optical signals propagating along the optical fibre links, which can in turn lead to poorer quantum state preparation, quantum logic gate operation, and measurement, thus making the quantum computing system more susceptible to errors. There remains room for improvement in controlling the phases and timing of optical signals propagating within and between the sub-systems of any photonic FTQC system.

### SUMMARY

While the invention is defined in the independent claims, further aspects of the invention are set forth in the dependent claims, the figures and the following description. As photonic FTQC systems involve fragile quantum states of light, it is primordial to appropriately manage losses across the whole system but also ensure that the optical signals' phase and timing be precisely controlled. In some situations, the optical fiber links optically connecting the sub-systems to one another and/or connecting components within the sub-systems can extend along a non-negligible length which, when exposed to varying surrounding conditions, may impart slower phase drifts to the optical signals propagating therealong. Moreover, the optical fiber links may receive a momentary localized or distributed stress (e.g., heat, pressure) which may impart faster phase changes to the optical signals propagating therealong. However, regardless of whether they are slow or fast, these environmentally induced phase changes have to be accounted for. Otherwise, the quantum states of the optical signals may be modified, resulting in an unwanted increase of the error rate.

In this disclosure, the optical fiber links do not only have a desired length and refractive index, but they are also made to respond to environmental changes in order to precisely control the optical signals' timing and phase, which is achieved using one or more optical phase change apparatuses along the optical fiber links. The optical phase change apparatus proposed herein can be used to change a phase of an optical signal propagating along an optical fiber link, for instance if it is detected or otherwise known that the optical signal has experienced an undesirable phase change, whether the phase change is fast or slow, or both. To do so, the optical phase change apparatus has a first phase change device which is optically coupled to a first fiber portion and which imparts a phase changing contribution to the first fiber portion, and a second phase change device which is optically coupled to a second fiber portion and which imparts a phase changing contribution to the second fiber portion. The first and second phase change devices are complementary to one another in the sense that the first phase change device is configured to be more efficient in addressing slower but larger phase changes whereas the second phase change device is configured to be more efficient in addressing smaller but faster phase changes. More specifically, the first phase change device operates within a slow response frequency range while the second phase change device operates within a fast response frequency range. Additionally or alternately, the first phase change device operates within a large phase change range while the second phase change device operates within a smaller phase change range. As such, the optical phase change apparatus can address environmentally induced phase changes appropriately.

In accordance with a first aspect of the present disclosure, there is provided an optical phase change apparatus comprising: an optical fiber link along which an optical signal propagates; a first phase change device coupled with a first fiber portion of the optical fiber link and configured for imparting a phase changing contribution to the first fiber portion via said coupling, the first phase change device operating within a first response frequency range; a second phase change device coupled with a second fiber portion of the optical fiber link and configured for imparting a phase changing contribution to the second fiber portion via said coupling, the second phase change device operating within a second response frequency range, the second response frequency range having a maximum response frequency value greater than a maximum response frequency value of the first response frequency range; and a controller communicatively connected to the first and second phase change devices, the controller configured for: upon determining that said optical signal experiences a given phase change including a given frequency value greater than the first response frequency range, instructing the first phase change device to impart, along the first fiber portion, a first phase change at a first response frequency value within the first response frequency range; and instructing the second phase change device to impart, along the second fiber portion, a second phase change at a second response frequency value within the second response frequency range and greater than the first response frequency range, the first and second phase changes corresponding to the given phase change.

Further in accordance with the first aspect of the present disclosure, the second response frequency value can for example be of at most about 40 GHz, preferably at most about 100 MHz and most preferably at most about 100 kHz.

Still further in accordance with the first aspect of the present disclosure, the first response frequency value can for example be of at most about 160 Hz, preferably at most about 50 Hz and most preferably at most about 10 Hz.

Still further in accordance with the first aspect of the present disclosure, the first phase change device can for example operate within a first phase range and the second phase change device operates within a second phase range, the first phase range greater than the second phase range, said first phase change imparted within the first phase range and said second phase change imparted within the second phase range.

Still further in accordance with the first aspect of the present disclosure, the first phase range can for example be of at most fifty thousand π, preferably at most five hundred π and most preferably at most forty π; and the second phase range is of at most one hundred π, preferably at most ten π and most preferably at most two π.

Still further in accordance with the first aspect of the present disclosure, the second phase change device can for example have a piezoelectric element mechanically coupled to the second fiber portion.

Still further in accordance with the first aspect of the present disclosure, the first phase change device can for example have a thermoelectric element thermally coupled to the first fiber portion.

Still further in accordance with the first aspect of the present disclosure, the first phase change device can for example have an electro-mechanical actuator mechanically coupled to the first fiber portion.

Still further in accordance with the first aspect of the present disclosure, the controller can for example monitor a current phase signal indicative of a current phase of the optical signal, said instructing being based on said monitored current phase signal.

In accordance with a second aspect of the present disclosure, there is provided a method of changing a phase of an optical signal, the method comprising: propagating the optical signal along an optical fiber link; coupling a first fiber portion of the optical fiber link to a first phase change device, the first phase change device configured for imparting a phase changing contribution to the first fiber portion via said coupling, the first phase change device operating within a first response frequency range; coupling a second fiber portion of the optical fiber link to a second phase change device, the second phase change device configured for imparting a phase changing contribution to the second fiber portion via said coupling, the second phase change device operating within a second response frequency range, the second response frequency range having a maximum response frequency value greater than a maximum response frequency value of the first response frequency range; and upon determining that said optical signal experiences a given phase change including a frequency greater than the first response frequency range: the first phase change device imparting, along the first fiber portion, a first phase change at a first response frequency value within the first response frequency range, and the second phase change device imparting, along the second fiber portion, a second phase change at a second response frequency value within the second response frequency range and greater than the first response frequency range, the first and second phase changes corresponding to the given phase change.

Further in accordance with the second aspect of the present disclosure, the second response frequency value can for example be of at most about 40 GHz, preferably at most about 100 MHz and most preferably at most about 100 kHz.

Still further in accordance with the second aspect of the present disclosure, the first response frequency value can for example be of at most about 160 Hz, preferably at most about 50 Hz and most preferably at most about 10 Hz.

Still further in accordance with the second aspect of the present disclosure, the first phase change device can for example operate within a first phase range and the second phase change device operates within a second phase range, the first phase range greater than the second phase range, said first phase change imparted within the first phase range and said second phase change imparted within the second phase range.

Still further in accordance with the second aspect of the present disclosure, the first phase range can for example be of at most fifty thousand π, preferably at most five hundred π and most preferably at most forty π; and the second phase range is of at most one hundred π, preferably at most ten π and most preferably at most two π.

Still further in accordance with the second aspect of the present disclosure, the method can for example further comprise monitoring a current phase signal indicative of a current phase of the optical signal, said operating based on said monitored current phase signal.

In accordance with a third aspect of the present disclosure, there is provided an optical apparatus comprising: an optical fiber link along which an optical signal propagates; a first phase change device coupled with a first fiber portion of the optical fiber link and configured for imparting a phase changing contribution to the first fiber portion via said coupling, the first phase change device operating within a first response frequency range; and a second phase change device coupled with a second fiber portion of the optical fiber link and configured for imparting a phase changing contribution to the second fiber portion via said coupling, the second phase change device operating within a second response frequency range, the second response frequency range having a maximum response frequency value greater than a maximum response frequency value of the first response frequency range, wherein, upon determining that said optical signal experiences a given phase change including a given frequency value greater than the first response frequency range: the first phase change device imparts, along the first fiber portion, a first phase change at a first response frequency within the first response frequency range; and the second phase change device imparts, along the second fiber portion, a second phase change at a second response frequency value within the second response frequency range and greater than the first response frequency range.

In accordance with a fourth aspect of the present disclosure, there is provided an optical phase change apparatus comprising: an optical fiber link along which an optical signal propagates; a first phase change device coupled with a first fiber portion of the optical fiber link and configured for imparting a phase changing contribution to the first fiber portion via said coupling, the first phase change device operating within a first phase range; a second phase change device coupled with a second fiber portion of the optical fiber link and configured for imparting a phase changing contribution to the second fiber portion via said coupling, the second phase change device operating within a second phase range greater than the first phase range; and a controller communicatively connected to the first and second phase change devices, the controller configured for: upon determining that said optical signal experiences a given phase change greater than the first phase range, instructing the first phase change device to impart a first phase change within the first phase range along the first fiber portion and instructing the second phase change device to impart a second phase change within the second phase range along the second fiber portion, the first and second phase changes corresponding to the given phase change.

In accordance with a fifth aspect of the present disclosure, there is provided a method of changing a phase of an optical signal, the method comprising: propagating the optical signal along an optical fiber link; coupling a first fiber portion of the optical fiber link to a first phase change device, the first phase change device configured for imparting a phase changing contribution to the first fiber portion via said coupling, the first phase change device operating within a first phase range; coupling a second fiber portion of the optical fiber link to a second phase change device, the second phase change device configured for imparting a phase changing contribution to the second fiber portion via said coupling, the second phase change device operating within a second phase range greater than the first phase range; and upon determining that said optical signal experiences a given phase change greater than the first phase range: the first phase change device imparting a first phase change within the first phase range along the first fiber portion, and the second phase change device imparting a second phase change within the second phase range along the second fiber portion, the first and second phase changes corresponding to the given phase change.

In accordance with a sixth aspect of the present disclosure, there is provided an optical apparatus comprising: an optical fiber link along which an optical signal propagates; a first phase change device coupled with a first fiber portion of the optical fiber link and configured for imparting a phase changing contribution to the first fiber portion via said coupling, the first phase change device operating within a first phase range; and a second phase change device coupled with a second fiber portion of the optical fiber link and configured for imparting a phase changing contribution to the second fiber portion via said coupling, the second phase change device operating within a second phase range greater than the first phase range, wherein upon determining that said optical signal experiences a given phase change greater than the first phase range, operating the first phase change device to impart a first phase change within the first phase range along the first fiber portion and operating the second phase change device to impart a second phase change within the second phase range along the second fiber portion, the first and second phase changes corresponding to the given phase change.

Further in accordance with the fourth aspect, the fifth aspect and/or the sixth aspect, the first phase change device can for instance operate within a first response frequency range and the second phase change device can for instance operate within a second response frequency range having a maximum response frequency value smaller than a maximum response frequency value of the first response frequency range, wherein, upon determining that the given phase change occurs at a given frequency value greater than the second response frequency range, the second phase change device imparts, along the second fiber portion, the second phase change at a second response frequency value within the second response frequency range; and the first phase change device imparts, along the first fiber portion, the first phase change at a first response frequency value within the first response frequency range and greater than the second response frequency range.

All technical implementation details and advantages described with respect to a particular aspect of the present invention are self-evidently mutatis mutandis applicable for all other aspects of the present invention.

Many further features and combinations thereof concerning the present improvements will appear to those skilled in the art following a reading of the instant disclosure.

### DESCRIPTION OF THE FIGURES

In the figures,
Fig. 1 is a schematic view of an example of a photonic fault-tolerant quantum computing (FTQC) system, incorporating an exemplary optical phase change apparatus, in accordance with one or more embodiments;
Fig. 1A is a graph showing a temporal shape of an optical pulse, in accordance with one or more embodiments;
Fig. 2A is a graph showing example response frequency spectrums for the first and second phase change devices of Fig. 1, in accordance with one or more embodiments;
Fig. 2B is a graph showing example dynamic phase ranges for the first and second phase change devices of Fig. 1, in accordance with one or more embodiments;
Figs. 3A-3F include graphs showing a first example of environmental perturbations imparting an optical phase change to an optical signal propagating along an optical fiber link of the optical phase change apparatus of Fig. 1, and phase changes imparted by the first and second phase change devices, respectively, and resulting in an unchanged optical phase of the optical signal, in accordance with one or more embodiments;
Figs. 4A-4E include graphs showing a second example of environmental perturbations imparting an optical phase change to an optical signal propagating along an optical fiber link of the optical phase change apparatus of Fig. 1, and phase changes imparted by the first and second phase change devices, respectively, and resulting in an unchanged optical phase of the optical signal, in accordance with one or more embodiments;
Fig. 5 is an oblique view of the optical phase change apparatus of Fig. 1, showing first and second phase change devices being communicatively coupled to a controller, in accordance with one or more embodiments;
Fig. 6A is a schematic view of an example of a first phase change device and an example of a second phase change device, shown with an alternating current (AC) connection between the second phase change device driver and actuator, in accordance with one or more embodiments;
Fig. 6B is a graph showing example response frequency spectrums for the first and second phase change devices of Fig. 6A, in accordance with one or more embodiments;
Fig. 7A is a schematic view of an example of a first phase change device and an example of a second phase change device, shown with a direct current (DC) connection between the second phase change device driver and actuator, in accordance with one or more embodiments;
Fig. 7B is a graph showing example response frequency spectrums for the first and second phase change devices of Fig. 7A, in accordance with one or more embodiments;
Fig. 8 is a flow chart of a method of changing a phase of an optical signal using the optical phase change apparatus of Fig. 1, in accordance with one or more embodiments;
Figs. 9-13 are schematic views of exemplary optical phase change apparatuses, including different optical phase change feedback sub-systems, in accordance with one or more embodiments; and
Fig. 14 is a block diagram of an example of a computing device of the controller of Fig. 5, in accordance with one or more embodiments.

### DETAILED DESCRIPTION

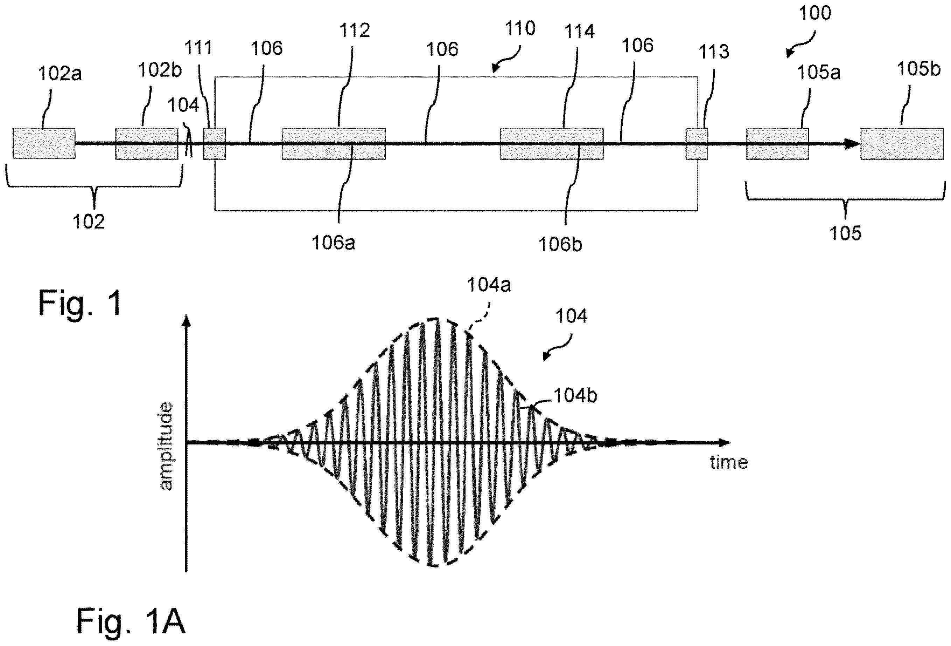

Fig. 1 shows an example of a quantum computer and more specifically of a photonic fault-tolerant quantum computing (FTQC) system 100, in accordance with an embodiment. As depicted, the photonic FTQC system 100 includes a preparation sub-system 102 and stitching and measurement sub-systems 105. In this example, the preparation sub-system 102 has a quantum light source 102a and a quantum light delivery device 102b. The preparation sub-system 102 prepares one or more optical signals 104 by imparting them with initial quantum states of light. For instance, the quantum states of light can include, but are not limited to, single-photon states, non-Gaussian states, squeezed states, squeezed vacuum states, Gottesman-Kitaev-Preskill (GKP) states, GKP magic states, and cat states, to name a few examples. In some embodiments, the optical signal 104 is provided in the form of a single optical pulse or a train of optical pulses.

Such optical pulses can have a temporal shape similar to the one shown in Fig. 1A. More specifically, the optical pulse 104 has an envelope 104a shown in dashed line whereas the solid line represents an amplitude 104b of the optical pulse 104. Note that there are several oscillations of the amplitude within a single optical pulse. For example, the wavelength, frequency, and period of the oscillations may be λ = 1550 nm, *f* = 193 THz, and T = 5.2 fs, respectively, while the width of the envelope may be in the range of 1-10 ns for some photonic FTQC applications. However, these parameters can change depending on the embodiment. Terms such as "time-of-flight," "arrival time," and "timing" of an optical pulse refer to the timing of the envelope 104a, whereas the phase of an optical pulse refers to the oscillations of the amplitude 104b within the envelope 104a. The optical signal can also be provided in the form of a continuous wave (CW) signal in some other embodiments. The CW signal can be modulated into pulses.

As shown, the stitching and measurement sub-systems 105 include the stitching sub-system 105a and the measurement sub-system 105b, which together would be used to perform measurement-based quantum computation (MBQC). As shown, the photonic FTQC system's sub-systems 102 and 105a are optically connected using one or more optical fiber links 106.

As discussed above, as undesirable environmentally induced phase changes can occur along any one of the optical fiber links 106, optical phase change apparatuses such as those shown at 110 are provided along corresponding ones of the optical fiber links 106. For instance, in this embodiment, the optical phase change apparatus 110 is provided along the optical fiber link 106 extending between the preparation sub-system 102 and the stitching sub-system 104a. However, the optical phase change apparatus 110 can be positioned at any suitable position along an optical fiber link. For instance, in the depicted embodiment, an optical phase change apparatus can be positioned between the quantum light source 102a and the quantum light delivery device 102b. Additionally or alternately, an optical phase change apparatus can be positioned between the stitching sub-system 105a and the measurement sub-system 105b. As described below, the optical phase change apparatus 110 imparts phase changing contributions (localized or distributed temperature variations, thermo-optic modulations, mechanical stress, electro-optic modulations, light pulses, etc.) along the optical fiber link 106 in a way which modifies a phase of an optical signal propagating therealong. For instance, upon determining that the optical signal 104 has experienced a given phase change, the optical phase change apparatus 110 can be operated to impart a compensating phase change to the optical signal 104 which cancels out the given phase change. In other words, the optical phase change apparatus 110 can be used to ensure that the phase of the optical signal 104 propagating along the optical fiber link 106 remains as close as possible to a reference phase or reference phase curve at all times.

More specifically, and as shown in Fig. 1, the optical phase change apparatus 110 encompasses the optical fiber link 106. In some embodiments, the optical fiber link 106 can be provided in the form of a single length of optical fiber. In some other embodiments, the optical fiber link 106 can include a series of optical fiber sections optically connected to one another via splices or fiber connectors, for instance. The type of optical fiber can include, but is not limited to, a single-mode telecommunications fiber such as the Corning^{®} SMF-28^{®} optical fiber, the Corning^{®} SMF-28^{®} Ultra-Low-Loss (ULL) optical fiber, the Corning^{®} SMF-28^{®} Ultra optical fiber, the Corning^{®} SMF-28e+^{®} optical fiber, the Corning^{®} ClearCurve^{®} single-mode optical fiber, the Sumitomo Electric^{®} Z Fiber^{™} LL, the Sumitomo Electric^{®} Z-PLUS Fiber^{™} 150, or any custom single-mode optical fiber designed to increase reliability under stress. It is noted that SMF-28 fibers have a propagation time temperature sensitivity of ~ 38 ps/km/K for a wavelength λ of 1550 nm. This equates to a phase temperature sensitivity of ~ 48 rad/m/K of which a vast majority (~ 95%) of this effect is due to a thermal dependence of the refractive index of the glass medium while the rest (~ 5%) is due to changes in the fiber length from thermal expansion/contraction. In some embodiments, the photonic FTQC system 100 involves fibered systems, in which case the optical phase change apparatus 110 can include an input port 111 at a first end of the optical fiber link 106, and an output port 113 at a second end, opposite the first end, of the optical fiber link 106. In some embodiments, the photonic FTQC system 100 involves free-space light propagation, in which case the optical phase change apparatus 110 can include an injection port at a first end of the optical fiber link where the optical signal propagating in free space is injected into and along a core of the optical fiber, and an output port at a second, opposite end of the optical fiber link where the optical signal can be outputted. In some embodiments, the photonic FTQC system 100 includes a combination of free-space optical and fibered propagation.

Still referring to Fig. 1, the optical phase change apparatus 110 has a first phase change device 112 coupled with a first fiber portion 106a of the optical fiber link 106 and configured for imparting a phase changing contribution to the first fiber portion 106a via its coupling to the first fiber portion 106a. Moreover, the optical phase change apparatus 110 has a second phase change device 114 coupled with a second fiber portion 106b of the optical fiber link 106 and configured for imparting a phase changing contribution to the second fiber portion 106b via its coupling thereto. In some embodiments, the first fiber portion 106a is spaced apart from but serially connected to the second fiber portion 106b. In some embodiments, the first fiber portion 106a and the second fiber portion 106b can partially or wholly overlap with one another. The first and second phase change devices 112 and 114 can be interchanged along the optical fiber link 106, meaning that the first fiber portion 106a can be upstream from the second fiber portion 106b, or vice versa. The optical fiber link 106 can have a length extending between 1 m and 500 m, and more preferably between 1 m and 250 m.

It is noted that the coupling between the first and second phase change devices 112 and 114 and the corresponding first and second fiber portions 106a and 106b can be a mechanical coupling, a thermal coupling, or an optical coupling, depending on the type of phase change device used. The phase changing contribution can thus be a mechanical contribution, a thermal contribution, an optical contribution, or a combination thereof. For instance, in some embodiments, the phase change device is configured to impart a mechanical force to the corresponding fiber portion. The mechanical force can be a compressive force squeezing the corresponding fiber portion across its diameter, a tension force pulling the fiber portion at two opposite locations thereof, and the like. Examples of such phase change devices can include, but are not limited to, piezoelectric-based devices, servomotor devices, electro-mechanical actuators, and the like. Alternately or additionally, the phase change device can be configured to impart a thermal stress to the fiber portion. In these embodiments, the thermal stress can be localized or distributed along a given length of the corresponding fiber portion. In these embodiments, the thermal stress can cause the fiber portion to increase or decrease in temperature. Examples of such phase change devices can include, but are not limited to, thermoelectric-based or Peltier devices. In some embodiments, the phase change device has an optical element configured to heat the fiber portion by directing optical light pulses repeatedly towards the fiber portion. Examples of such phase change devices can include, but are not limited to, devices based on ultra-fast laser pulses and acousto-optic modulated lasers. Alternately or additionally, the phase change device can be configured to exploit the electro-optic effect. In these embodiments, the refractive index of the fiber portion is adjusted via the application of an electromagnetic field. Examples of such phase change devices can include, but are not limited to, free-space and fiber-coupled electro-optic modulators such as lithium niobate phase modulators. It is intended that any type of matter interactions which can cause a phase changing contribution, either resulting in fast and slow phase changes, can be used in the optical phase change apparatus 110.

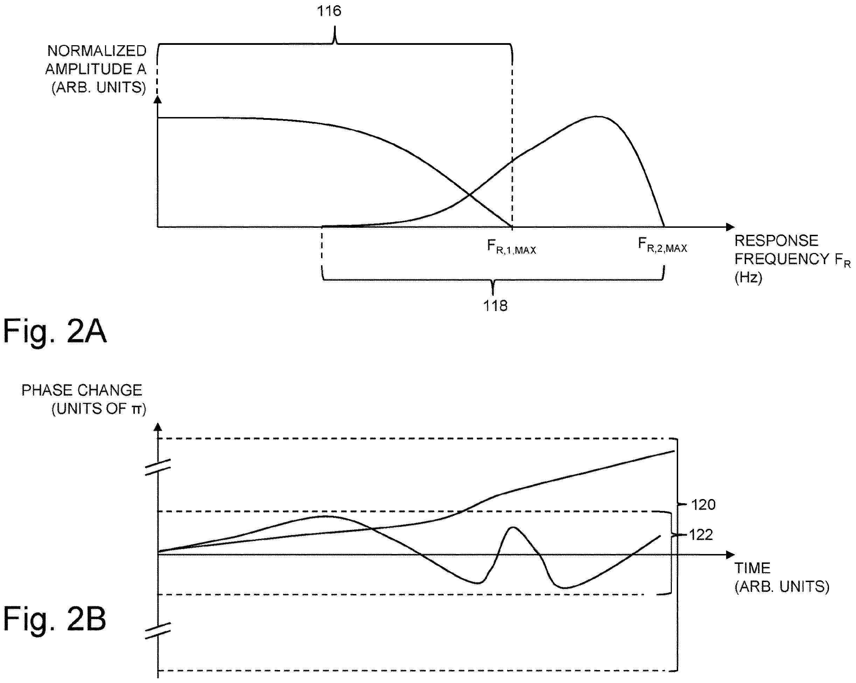

Regardless of the type of phase change device used, the first and second phase change devices 112 and 114 are configured for imparting their own phase changing contributions to the first and second fiber portions 106a and 106b, respectively. As best shown in Fig. 2A, the first phase change device 112 is selected to operate within a first response frequency range 116 whereas the second phase change device 114 is selected to operate within a second response frequency range 118. More specifically, the second response frequency range 118 has a maximum response frequency value F_{R,2,MAX} greater than a maximum response frequency value F_{R,1,MAX} of the first response frequency range 116. In other words, the second phase change device 114 operates within a faster response frequency range while the first phase change device 112 operates within a slower response frequency range. For instance, the maximum response frequency F_{R,2,MAX} of the second response frequency range 118 can be at most about 40 GHz, preferably at most about 100 MHz and most preferably at most about 100 kHz. The maximum response frequency F_{R,1,MAX} of the first response frequency range 116 can be of at most about 160 Hz, preferably at most about 50 Hz and most preferably at most about 10 Hz. In some embodiments, the first and second response frequency ranges 116 and 118 have partially overlapping portions or tails such as illustrated in Fig. 2A. In some embodiments, the first and second response frequency ranges 116 and 118 are fully separate from one another.

The optical phase change apparatus 110 is operated such that, upon determining that the optical signal 104 propagating along the optical fiber link 106 experiences a given phase change including one or more given frequency values greater than the first response frequency range 116, the first phase change device 112 is operated to impart, along the first fiber portion 106a, a first phase change at a first response frequency value within the first response frequency range 116, and the second phase change device 114 is operated to impart, along the second fiber portion 106b, a second phase change at a second response frequency value within the second response frequency range 118 and greater than the first response frequency range 116. The first and second phase changes added to one another corresponds to the given phase change in the sense that they cancel out the given phase change or re-center the phase with respect to a reference phase value.

As best shown in Fig. 2B, the first and second phase change devices 112 and 114 have respective dynamic phase ranges 120 and 122. More specifically, the first phase change device 112 operates within a first phase range 120 and the second phase change device 114 operates within a second phase range 122, with the first phase range 120 being greater than the second phase range 122. Correspondingly, the first phase change lies within the first phase range and the second phase change lies within the second phase range. It was found that the limited phase range of the second phase change device 114 can often times result in a phase slip, i.e., when the phase adjustment reaches the limit of the second phase change device's phase range and it jumps or "slips" to a different period of oscillation, causing unwanted disturbances to the overall system. As such, combining the use of the first and second phase change devices 112 and 114 can help prevent the second phase change device 114 from working beyond the second phase range 122 and thus can limit phase slipping.

As such, the first and second phase change devices 112 and 114 are complementary to one another in the sense that the first phase change device 112 is configured to be more efficient in addressing slower but larger phase changes whereas the second phase change device 114 is configured to be more efficient in addressing smaller but faster phase changes. Put otherwise, the first phase change device 112 operates within a larger phase range while the second phase change device operates within a smaller phase range. For instance, the first phase range 120 is of at most fifty thousand π, preferably at most five hundred π and most preferably at most forty π. In some embodiments, the second phase range 122 is of at most one hundred π, preferably at most ten π and most preferably at most two π. In view of the above, the first phase change device 112 can be used for coarse tuning the optical phase of the optical signal while the second phase change device 114 can be used for fine tuning the optical phase of the optical signal.

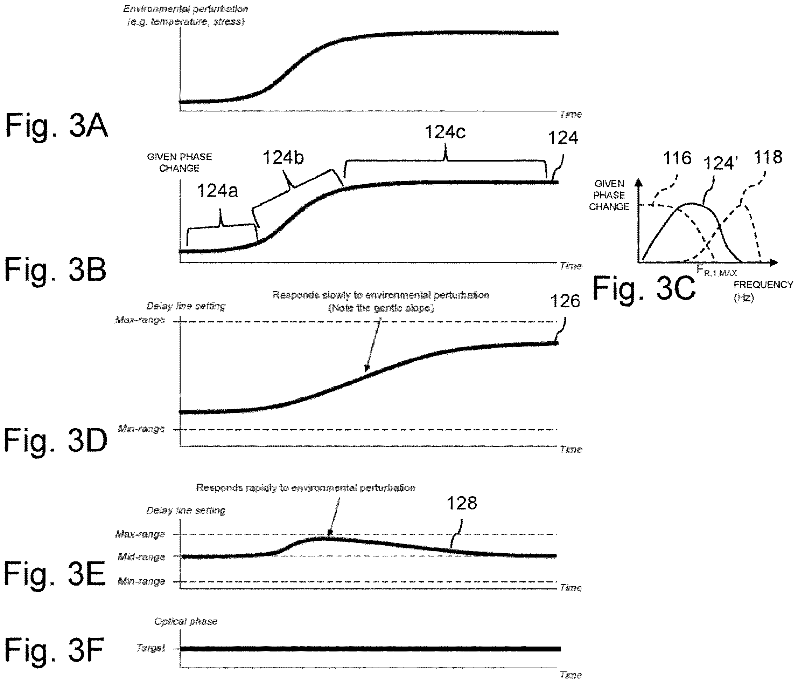

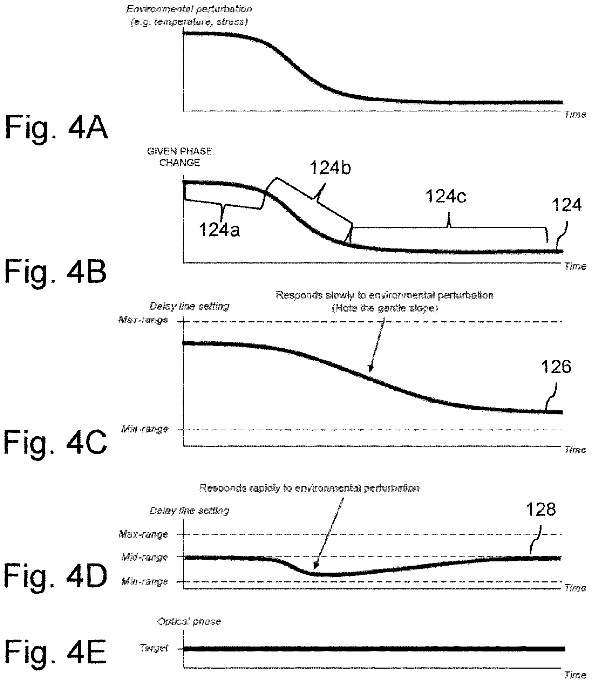

Figs. 3 and 4 show how typical environmentally induced phase changes are addressed using the optical phase change apparatus 110 of Fig. 1. Referring specifically to Fig. 3A, environmental conditions perturb the optical fiber link over time. These environmental perturbations cause a given optical phase change 124 such as the one shown in Fig. 3B. In some embodiments, the given optical phase change 124 is measured using a detector which generates a time-varying signal. When a Fourier transform is performed on the time-varying signal, a frequency spectrum 124' of the given optical phase change 124 can be obtained. An example of the frequency spectrum 124' of the given optical phase change 124 is shown in Fig. 3C. As illustrated, the frequency spectrum 124' of the given optical phase change 124 includes one or more frequency values which are greater than the maximum response frequency F_{R,1,MAX} of the first response frequency range 116 and which are part of the second response frequency range 118. As depicted, the given optical phase change 124 includes a first portion 124a in which the optical phase increases slightly at a slow rate of change, a second portion 124b in which the optical phase increases abruptly at a faster rate of change and ultimately ends with a third portion 124c in which the optical phase plateaus. In response to such optical phase increase, the first optical phase change device 112 is operated to impart a first phase change 126 as shown in Fig. 3D while the second optical phase change device 114 is operated to impart a second phase change 128 as shown in Fig. 3E. As illustrated, during the first portion 124a of the given phase change 124, the first phase change device 112 is used to compensate for the slow increase of the phase. However, when the phase increases at a steeper rate of change, during the second portion 124b of the given phase change 124, contributions from the second phase change device 114 are relatively more important to ensure that the faster rate of change of the given phase change 124 is met with a corresponding phase compensation. When combined with one another, the first and second phase changes 126 and 128 imparted by the first and second phase change devices 112 and 114, respectively, cancel out the perturbation of the optical signal's phase, as shown in Fig. 3F.

Referring specifically to Fig. 4A, environmental conditions perturb the optical fiber link over time. These environmental perturbations cause a given optical phase change 124 such as the one shown in Fig. 4B. As depicted, the given optical phase change 124 includes a first portion 124a in which the optical phase decreases slightly at a slow rate of change, a second portion 124b in which the optical phase falls abruptly at a faster rate of change and ultimately ends with a third portion 124c in which the optical phase plateaus. In response to such optical phase decrease, the first optical phase change device 112 is operated to impart a first phase change 126 as shown in Fig. 4Cwhile the second optical phase change device 114 is operated to impart a second phase change 128 as shown in Fig. 4D. As illustrated, during the first portion 124a of the given phase change 124, the first phase change device 112 is used to compensate for the slow decrease of the phase. When the phase decreases at a steeper rate, during the second portion 124b of the given phase change 124, contributions from the second phase change device 114 are relatively more important to ensure that the faster rate of change of the given phase change is met with a corresponding phase compensation. When combined with one another, the first and second phase changes 126 and 128 imparted by the first and second phase change devices 112 and 114, respectively, cancel out the perturbation of the optical signal's phase, as shown in Fig. 4E. In view of these examples, it is understood that the optical phase change apparatus 110 described herein can be used to compensate for both small and large phase changes occurring at both faster and slower rates of change.

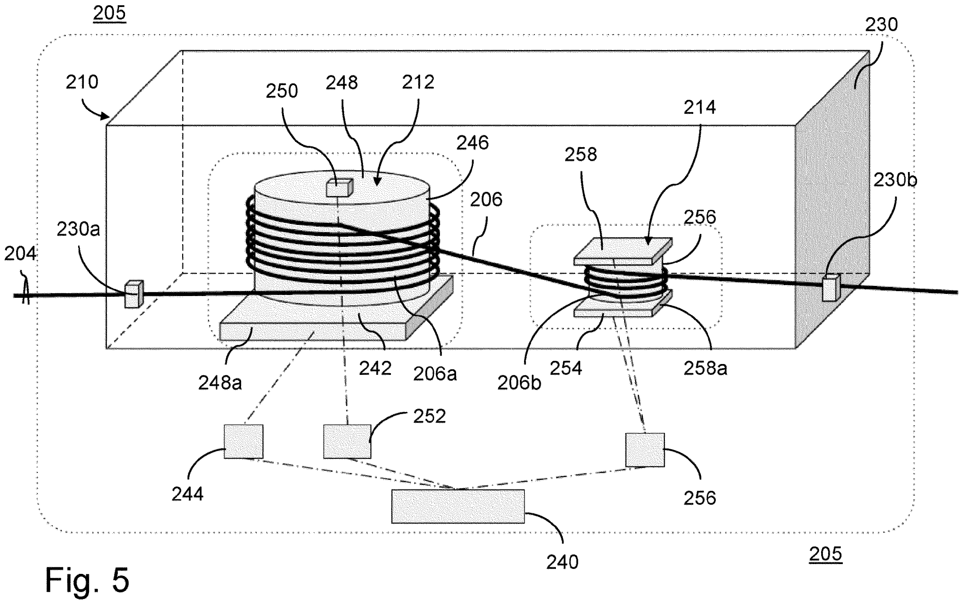

Fig. 5 shows an example of an optical phase change apparatus 210, in accordance with an embodiment. As depicted, the optical phase change apparatus 210 has an optical fiber link 206 along which an optical signal 204 propagates. In this embodiment, the optical phase change apparatus 210 has an enclosure 230 inside which the optical fiber link 206 extends. As shown, the enclosure 230 is provided with an entry port 230a and an exit port 230b between which the optical fiber link 106 extends. In some embodiments, the enclosure 230 includes a thermally insulating material (e.g., plastic, foam, rubber, vacuum flask) for thermal and/or mechanical isolation from the surrounding environment 205.

As illustrated, the optical phase change apparatus 210 has a first phase change device 212 and a second phase change device 214 which are both enclosed inside the enclosure 230. More specifically, the first phase change device 212 is coupled with a first fiber portion 206a of the optical fiber link 206 and configured for imparting a phase changing contribution to the first fiber portion 206a via the coupling. A second phase change device 214 is also coupled with a second fiber portion 206b of the optical fiber link 206. The second phase change device 214 is configured for imparting a phase changing contribution to the second fiber portion 206b via the coupling. Although the first and second fiber portions 206a and 206b are shown to be spaced apart from one another along a length of the optical fiber link 206 in this example, the first and second fiber portions can partially or wholly overlap with one another in some other embodiments. Typically, as the first phase change imparted by the first phase change device 212 on the first fiber portion 206a is slower and of larger amplitude, the first fiber portion 206a can have a relatively longer length. On the contrary, the second fiber portion 206b can have a relatively shorter length as it is used to impart rather faster phase changes of relatively small amplitudes.

The optical phase change apparatus 210 has a controller 240 which is communicatively coupled at least to the first phase change device 212 and to the second phase change device 214. The controller 240 has a processor and a non-transitory memory having stored thereon instructions which when executed by the processor perform steps. The controller 240 can thus be used to receive phase change data indicative of a given phase change experienced by the optical signal 204 propagating along the optical fiber link 206, and to operate the first and second phase change devices 212 and 214 to compensate the given phase change with complementary first and second phase changes, respectively. In some embodiments, the controller 240 monitors a current phase signal indicative of a current phase of the optical signal 204 and operates or otherwise sends operation instructions to the first and second phase change devices 212 and 214 accordingly, in a real time or quasi-real time manner. For instance, the controller 240 can instruct the first phase change device 212 to impart the first phase change. Similarly, the controller 240 can instruct the second phase change device 214 to impart the second phase change. The current phase of the optical signal 204 can be measured or otherwise monitored either downstream or upstream from the optical phase change apparatus 210, depending on the embodiment.

As shown, in this embodiment, the first phase change device 212 is provided in the form of a thermoelectric element 242 operating within a first response frequency range. The thermoelectric element 242 is thermally coupled to the first fiber portion 206a. The thermoelectric element 242 can be driven to heat or cool the first fiber portion 206a, depending on what phase change is required at any given moment. The thermoelectric element 242 can be driven by a thermoelectric driver 244 in communication with the controller 240. In this specific embodiment, the first fiber portion 206a is looped about a first cylindrical surface 246 made of a thermally conductive material. As such, by thermally coupling the thermoelectric element 242 to the first cylindrical surface 246, temperature variations imparted by the thermoelectric element 242 can be conveyed to the first fiber portion 206a via the first cylindrical surface 246. It is noted that the first phase change is mostly caused by a change of refractive index of the propagating medium of the first fiber portion 206a upon cooling and heating, and that only a small portion of the first phase change is due to the expansion or contraction of the first fiber portion 206a along its length. In some embodiments, the first cylindrical surface 246 is part of a first mandrel 248 having a base 248a fixed within the enclosure 230. The thermoelectric element 242 can be thermally coupled to the base 248a of the first mandrel 248 or to a portion of the enclosure 230 receiving the first mandrel 248, depending on the embodiment. The first mandrel 248 has a diameter which is large enough not to incur losses to the optical signal 104 propagating around the first cylindrical surface 246. In some embodiments, the first fiber portion 206a acts as a first delay line where the optical signal can be delayed by a given amount of time corresponding to a length of the first fiber portion 206a. For instance, the first fiber portion 206a can extend along at least 1 m, preferably at least 200 m and most preferably at least 250 m, depending on the embodiments. Additionally, a temperature sensor 250 can be positioned proximate to the first fiber portion 206a and/or to the thermoelectric element 242 to monitor a current temperature of the first fiber portion 206a and/or of the thermoelectric element 242. A temperature reader 252 can be communicatively coupled to the temperature sensor 250 and/or to the controller 240, such as shown in Fig. 5. It is understood that since the phase changing contribution imparted by the thermoelectric element 242 requires heating and cooling, which can only be performed at relatively slow rates of change, the first response frequency can range between 0 Hz and 100 Hz, for instance.

In some alternate embodiments, the first phase change device 212 does not necessarily have a thermoelectric element, but rather has an electro-mechanical element. In these embodiments, the phase change device is configured to impart a mechanical force to the first fiber portion. The mechanical force can be a tension force stretching the first fiber portion, for example. In such embodiments where the first phase change device has an electro-mechanical element, the first response frequency can range between 0 Hz and 160 Hz, for instance. In some embodiments, the electro-mechanical element may be a solenoid element.

In this example, the second phase change device 214 is provided in the form of a piezoelectric element 254 mechanically coupled to the second fiber portion 206b. The piezoelectric element 254 can be driven to apply a mechanical stress to the second fiber portion 206b. More specifically, in this example, the second fiber portion 206b is looped around a second cylindrical surface 256 made of a rigid material. The piezoelectric element 254 can be driven by a piezoelectric driver 256 in communication with the controller 240. As such, as the piezoelectric element 254 is mechanically coupled to the second cylindrical surface 256, the second cylindrical surface 256 can expand and contract repeatedly. Such expansions and contractions imparted by the piezoelectric element 254 can be conveyed to the second fiber portion 206b via the second cylindrical surface 256. In this specific embodiment, the second cylindrical surface 256 is part of a second mandrel 258 having a base 258a fixed within the enclosure 230. The second mandrel 258 has a diameter which is large enough not to incur losses to the optical signal propagating around the second cylindrical surface 256. It is intended that the second cylindrical surface 256 can be omitted, as the piezoelectric element 254 can be in direct coupling with the second fiber portion 206b in some other embodiments. In some embodiments, the second fiber portion 206b also acts as a second delay line where the optical signal can be delayed by a given amount of time corresponding to a length of the second fiber portion 206b. In some embodiments, the second delay line is shorter than the first delay line, or vice versa, depending on the embodiment. Although the second fiber portion 206b is shown to be looped around the cylindrical surface 256 in this embodiment, it is intended that the second fiber portion 206b is not necessarily coiled in some other embodiments. Indeed, in some embodiments, the second fiber portion 206b can extend linearly when put under tension at both opposite ends of the second fiber portion 206b, with the phase changing contribution being imparted at either one or both of the ends of the second fiber portion 206b. For instance, the linearly extending fiber portion can be so affixed to a metal plate, rod, or anvil. In these embodiments, the phase changing contribution can be locally imparted at a point along the tensioned fiber or along a range thereof. It is understood that since the phase changing contribution imparted by the piezoelectric element 254 is driven with an electrical signal, which can bear quite high frequencies, the second response frequency range can range between 0 Hz and 100 kHz, for instance. In embodiments where the phase changing contribution is imparted using a lithium niobate phase modulator, the second response frequency range can range between 0 Hz and 40 GHz. Although the lithium niobate phase modulators may be more lossy compared to piezoelectric elements and thermoelectric elements, they can be satisfactory in applications where faster response frequencies are desired. As such, the second response frequency range of the second phase change device 214 has a maximum response frequency value greater than a maximum response frequency value of the first response frequency range.

In some embodiments, the second phase change device 214 does not necessarily have a piezoelectric element or an electro-optic element, but rather has a thermoelectric element similarly to the first phase change device 212. In these embodiments, the second fiber portion can be wound about the second mandrel, but since the second fiber portion is shorter than the first fiber portion (due in part to the mandrel having a smaller diameter than a diameter of the first mandrel), the second phase change device 214 provides a second response frequency range which is faster than the first response frequency range. In embodiments where thermoelectric elements are used, it is encompassed that any positioning of the thermoelectric element is satisfactory as long as it can impart a phase changing contribution to the corresponding fiber portion. For instance, the thermoelectric element can be mounted inside the cylindrical surface, at a top or base thereof, or to a plate on which the cylindrical surface is seated. In some embodiments, the second phase change device 214 can include a combination of a piezoelectric element and a thermoelectric element. Depending on the embodiment, the second fiber portion can be i) wound around a piezoelectric mandrel which expands or contracts radially upon application of a driving voltage; ii) mounted over a piezoelectric anvil which pushes or pulls laterally on the second fiber portion upon application of a driving voltage; iii) mounted on a piezoelectric rod which lengthens or shrinks the second fiber portion upon application of a driving voltage; and iv) held between two endpoints, at least one of which moves due to a piezoelectric actuator upon application of a driving voltage.

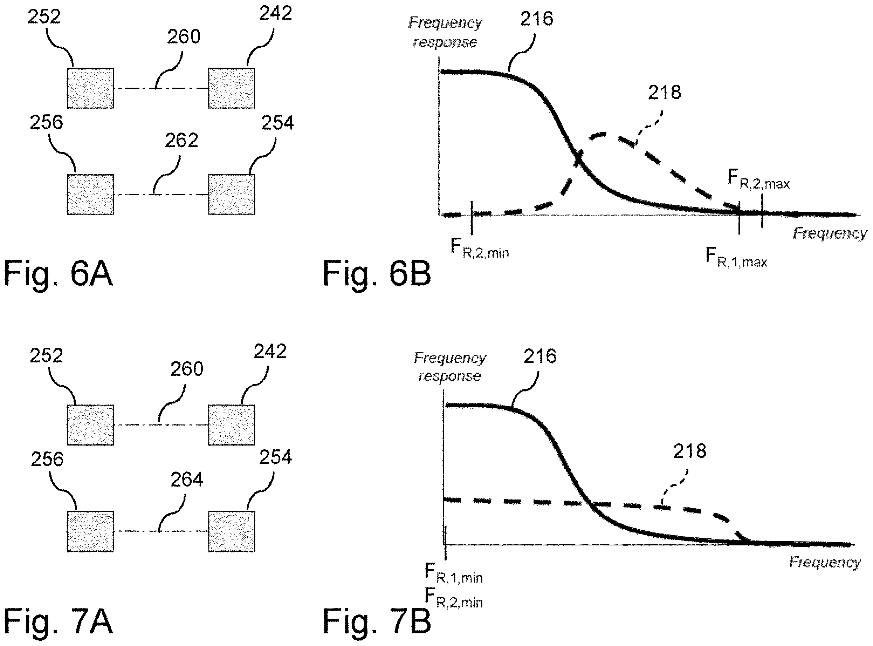

When driven by a DC signal rather than an AC signal, a phase change device (such as each of the phase change devices 212 and 214) can have a response frequency range with a minimum response frequency value of 0 Hz. Therefore, the shape of the first and second response frequency ranges can depend on how the phase change devices 212 and 214 are driven. For instance, the thermoelectric element 242 can be driven using a DC signal 260 such as shown in Figs. 6A and 7A. The resulting response frequency range 216 can be such as shown in the solid lines of Figs. 6B and 7B. More specifically, such a first response frequency range 216 can extend from 0 Hz to a given maximum response frequency value F_{R,1,MAX}. In some other embodiments, the thermoelectric element 242 can be driven using an AC signal as well. Referring now to Fig. 6A, the piezoelectric element 254 can be driven using an AC signal 262. In these embodiments, the second response frequency range 218 can extend from a given minimum response frequency value F_{R,2,MIN} to a given maximum response frequency value F_{R,2,MAX}. In some embodiments, the minimum response frequency value F_{R,2,MIN} of the second response frequency range 218 is greater than the maximum response frequency value F_{R,1,MAX} of the first response frequency range 216. In contrast, such as shown in Fig. 7A, when the piezoelectric element 254 is driven by a DC signal 264, e.g., a fast DC signal, the minimum response frequency value F_{R,2,MIN} can be 0 Hz. In these embodiments, the second phase change device can be used to impart either fast or slow phase changes to the second fiber portion.

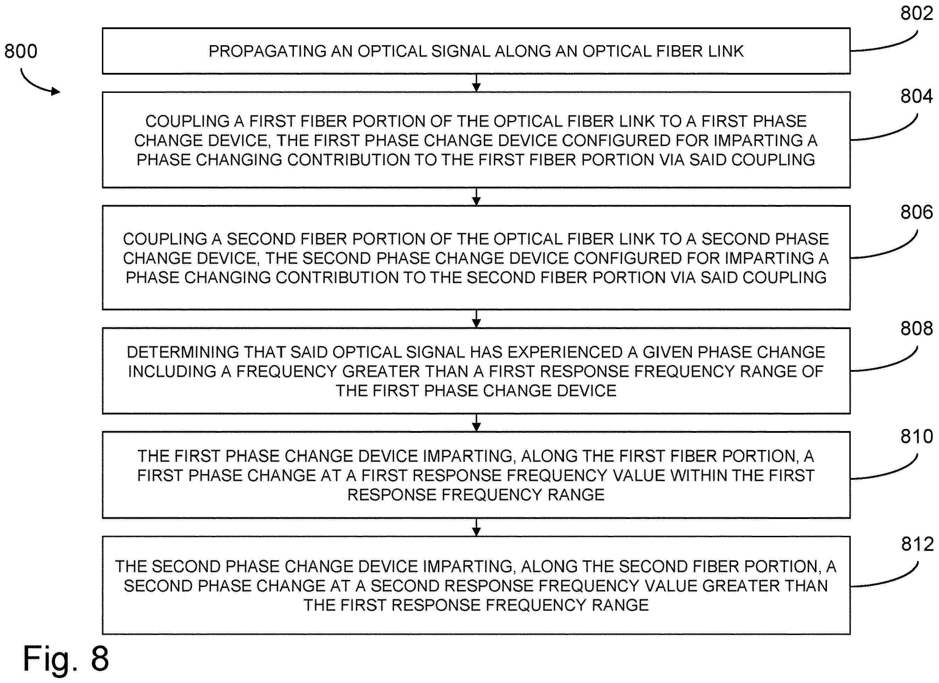

Fig. 8 shows a flow chart of a method 800 of changing a phase of an optical signal, in accordance with an embodiment. The method 800 is described with reference to the optical phase change device of Fig. 1. Accordingly, alternatives and options described with reference to Fig. 1 also apply to the method 800.

At step 802, an optical signal is propagated along an optical fiber link. The optical fiber link can include one or more sections of optical fiber serially connected to one another. In an exemplary photonic FTQC system, the optical fiber link can optically connect between and/or within one or more sub-systems of the photonic FTQC system. In a given photonic FTQC system, the method 800 can be performed along one or more optical fiber links sequentially or simultaneously, in order to control the timing and phase of the optical signals propagated along the optical fiber links. However, for ease of reading, the method 800 is described with respect to only one optical fiber link.

At step 804, a first fiber portion of the optical fiber link is coupled to a first phase change device. As discussed above, this coupling can be a thermal coupling in embodiments where the first phase change device includes a thermoelectric element. The first phase change device is configured for imparting a phase changing contribution to the first fiber portion via the coupling.

At step 806, a second fiber portion of the optical fiber link is coupled to a second phase change device. As discussed above, this coupling can be a mechanical coupling in embodiments where the second phase change device includes a piezoelectric element. Otherwise, the coupling may be an optical coupling in embodiments wherein the second phase change device includes a pulse emitting device directed at the second fiber portion. It is intended that the second phase change device is configured for imparting a phase changing contribution to the second fiber portion via that coupling.

As discussed in detail above, the first phase change device operates within a first response frequency range while the second phase change device operates within a second response frequency range, and the second response frequency range has a maximum response frequency value greater than a maximum response frequency value of the first response frequency range. As such, the second phase change device can impart a phase change at a greater response rate or frequency than the first phase change device.

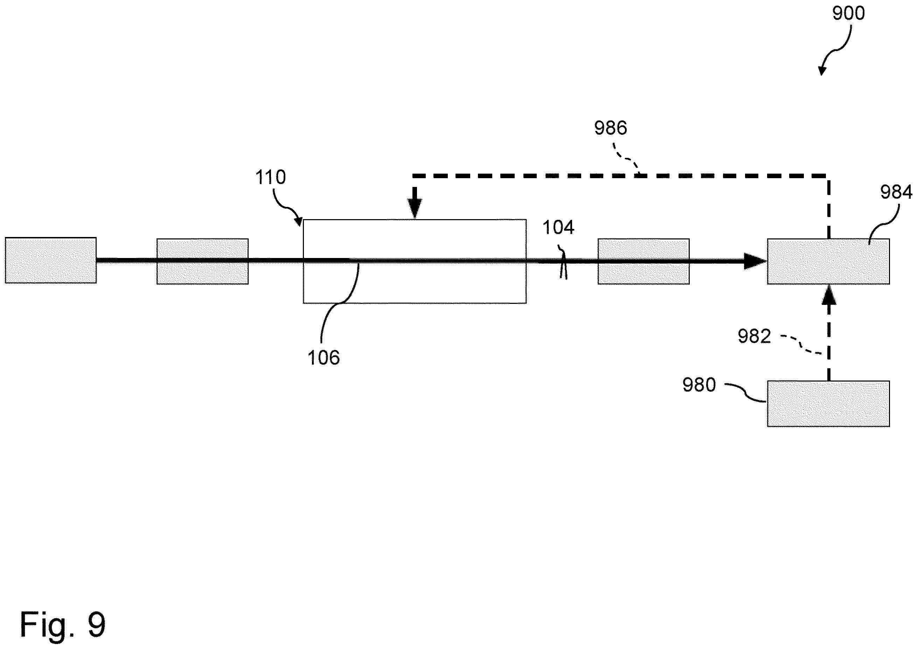

At step 808, it is determined that the optical signal propagated along the optical fiber link has experienced a given phase change including a frequency greater than a first response frequency range of the first phase change device. The given phase change can be detected in real time thanks to an optical phase change feedback sub-system, examples of which are described below with reference to Figs. 9-13. In embodiments where the given optical phase change is not detected, it can be estimated based on known temperature variations occurring around the optical fiber link or based on known mechanical stress variations imparted along the optical fiber link. Such known temperature variations, known mechanical stress variations, and associated phase changes, can be stored on a computer memory accessible by the controller, for instance.

At step 810, the first phase change device imparts, along the first fiber portion, a first phase change at a first response frequency value within the first response frequency range. The first phase change is meant to be a slower variation of the phase of the optical signal, thanks to the slower response frequency range of the first phase change device.

At step 812, the second phase change device imparts, along the second fiber portion, a second phase change at a second response frequency value within the second response frequency range and greater than the first response frequency range. The second phase change is meant to be a faster variation of the phase of the optical signal, due to the faster response frequency range of the second phase change device.

By performing steps 810 and 812, either simultaneously or sequentially, and in any order, the first and second phase changes can be made to cancel out the given phase change, thereby canceling out the environmentally induced perturbations. The method 800 can include a step of monitoring a current phase signal indicative of a current phase of the optical signal. In these embodiments, the steps 810 and 812 can be based on the current phase signal and on how it compares to a reference phase value, for instance. In some embodiments, the current phase value carried by the current phase signal is compared (e.g., subtracted) to a reference phase value, and the steps 810 and 812 are based on that comparison (e.g., on that difference).

In some embodiments, the construction of the first and second phase change devices enables the first phase change device to operate within a first phase range and the second phase change device to operate within a second phase range, with the first phase range greater than the second phase range. In these embodiments, the first phase change imparted by the first phase change device can have a slower rate of change but a larger phase change amplitude-wise while the second phase change imparted by the second phase change device can have a faster rate of change but smaller phase change amplitude-wise. In some embodiments, upon determining that the optical signal experiences a steeper phase change, the second phase change rapidly imparted by the second phase change device can be greater at first but then can decrease once the first phase change imparted by the first phase change gradually catches up over time due to its slower response frequency range. In some embodiments, the steps 810 and 812 are performed in a way that forces the second phase change device to work as far as possible from the maximum value of its second phase range. In other words, the steps 810 and 812 are performed to keep the amplitude of the second phase change as close as possible to a minimum phase range value of the second phase range. For long-term operation, phase slip is avoided by adjusting the first phase change imparted by the first phase change device to keep the second phase change device within its dynamic phase range.

Figs. 9-13 show examples of optical phase change feedback sub-systems that can be used with the optical phase change apparatus 110 described herein. Such feedback sub-systems can include programmable logic devices (PLD) acting as a feedback loop to correct the phase of the optical signal in real time. More specifically, Fig. 9 shows an example of an optical phase change feedback sub-system 900 incorporating a reference timer 980 generating a reference signal 982 which is communicated either directly or indirectly to the controller of the optical phase change apparatus 110. In the illustrated embodiment, the reference signal 982 is sent to a destination apparatus 984 receiving both the optical signal 104 from the optical fiber link 106 and the reference signal 982. By interacting the optical signal 104 with the reference signal 982 at the destination apparatus 984, a feedback signal 986 can be generated to stabilize the phase change correction that is performed in real time or quasi-real time. In this embodiment, the feedback signal 986 can be used to monitor a given phase change experienced by the optical signal 104 over time. As such, the feedback signal 986 can be used as a basis for the operation of the first and second phase change devices and associated first and second phase changes.

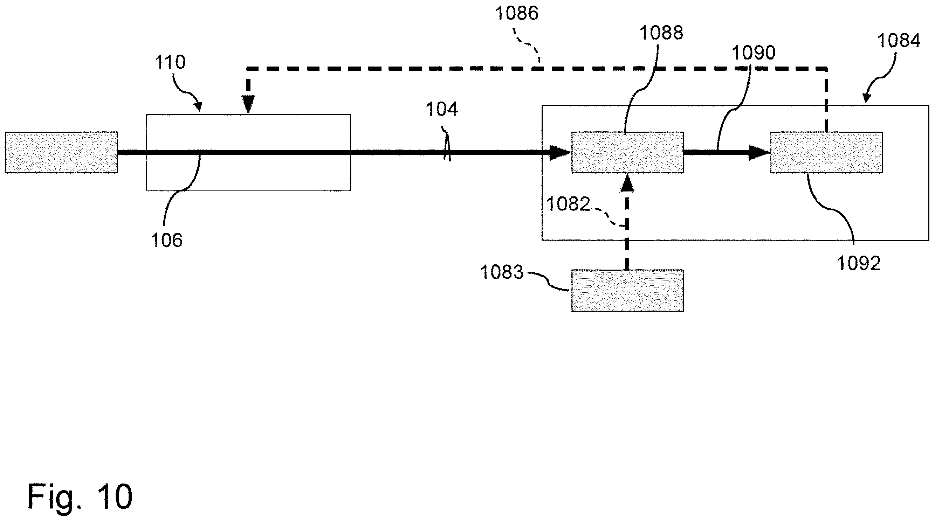

An example of a destination apparatus 1084 is shown in greater detail in Fig. 10. As shown, the destination apparatus 1084 has a coherent optical detector 1088 receiving the optical signal 104 from the optical fiber link 106 but also a reference light signal 1082 generated by a reference light source 1083. Both the optical signal 104 and the reference light signal 1082 impinging simultaneously onto the coherent optical detector 1088 can create an electric beat output 1090 which can be monitored in real time using an electronic signal analyzer 1092. In this example, the feedback signal 1086 is generated by the electronic signal analyzer 1092 based on the electric beat output 1090. The large phase adjustments provided by the first phase change device are typically used to control the relative timing and account for timing errors, and the small adjustments provided by the second phase change device are generally used to control the relative optical phase and account for phase errors. It should be noted that the term "timing errors" here refers to delays of much more than one optical wave period of the light, whereas the term "optical phase errors" are indistinguishable every 2π radians. For example, a timing error may be 10 picoseconds, which corresponds to 2000 optical wave periods at a wavelength of 1550 nm (frequency of 193 THz), yet the optical phase repeats every 5.2 femtoseconds (1/193 THz). Thus, the feedback can first indicate the timing error as a large change and then make small adjustments to achieve the desired alignment of optical phase.

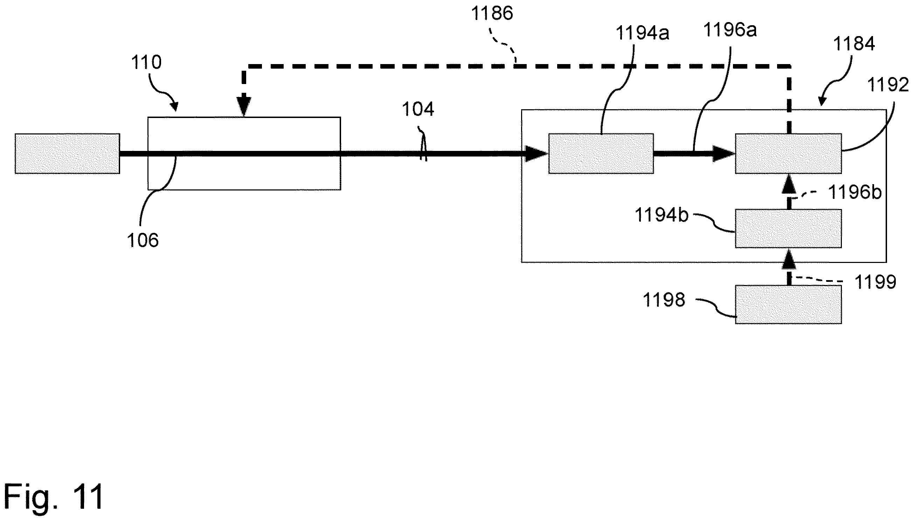

Another example of a destination apparatus 1184 is shown in greater detail in Fig. 11. As shown, the destination apparatus 1184 has a first photodetector 1194a receiving the optical signal 104 from the optical fiber link 106. Upon reception, the first photodetector 1194a generates a first electrical signal output 1196a. In parallel, a reference light source 1198 propagates a reference light signal 1199 onto a second photodetector 1194b which generates, upon reception of the reference light signal 1199, a second electrical output 1196b. Both the first and second electrical outputs 1196a and 1196b are sent to an electronic signal analyzer 1192 which can produce a feedback signal 1186 based on a beat occurring between the first and second electrical outputs 1196a and 1196b.

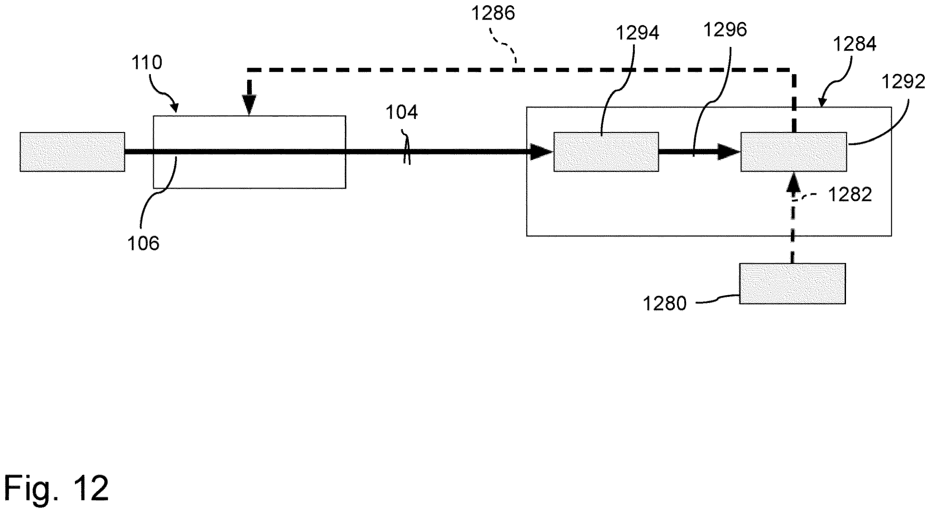

Another example of a destination apparatus 1284 is shown in greater detail in Fig. 12. As depicted in this example, the reference light source and associated photodetector are omitted. More specifically, the destination apparatus 1284 has a photodetector 1294 receiving the optical signal 104 from the optical fiber link 106. Upon reception, the photodetector 1294 generates an electrical signal output 1296 which is transmitted to an electronic signal analyzer 1292. In this specific embodiment, a reference timer 1280 is provided which generates a reference signal 1282 sent to the electronic signal analyzer 1292 as well. As shown, the feedback signal 1286 in this example results from a beat occurring between the reference signal 1282 and the electrical signal output 1296 generated by the photodetector 1294.

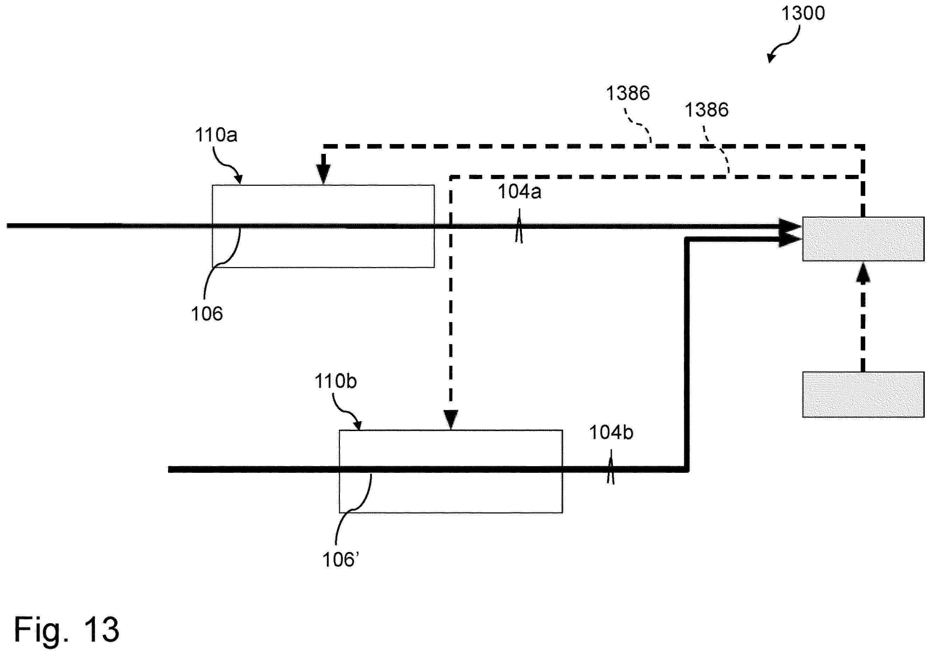

Fig. 13 shows an example of an optical phase change feedback sub-system 1300 in which feedback signal 1386 is sent to one or more controllers pertaining to two distinct optical phase change apparatuses 110a and 110b. As shown, the optical phase change apparatus 110a has an optical fiber link 106 along which a first optical signal 104a propagates. Similarly, the optical phase change apparatus 110b has an optical fiber link 106' along which a second optical signal 104b propagates. In this embodiment, the two optical phase change apparatuses 110a and 110b are independent from one another, meaning that the optical fiber links 106 and 106' can experience different environmentally induced phase changes, but are both using the same feedback signal 1386. It is intended that the same feedback signal 1386 can be used by more than two optical phase change apparatuses, depending on the embodiment. It was found particularly valuable to provide a single optical phase change feedback sub-system 1300 to control multiple optical signals at a destination, as it reduces the overall footprint and cost of the corresponding system.

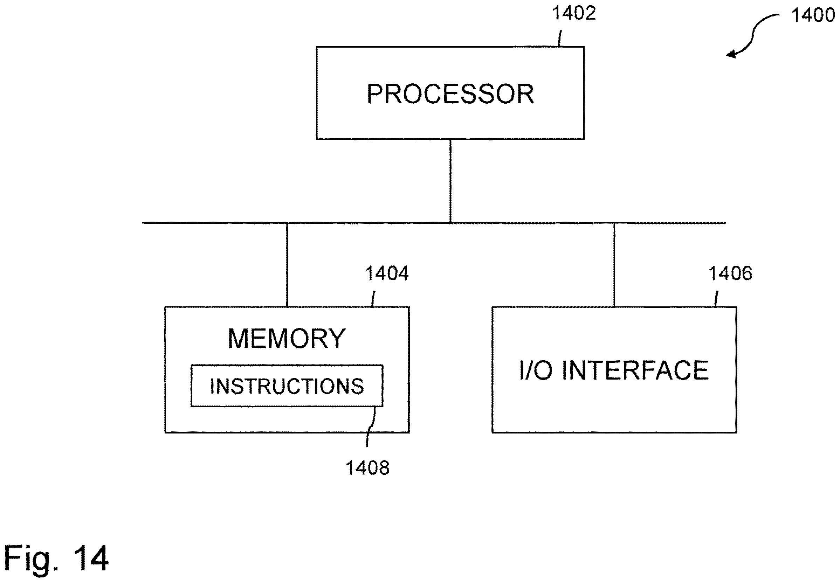

With respect to controllers, computers, processors, or processing units, the expression "configured to" relates to the presence of hardware or a combination of hardware and software which is operable to perform the associated functions. The controller 240 shown in Fig. 5 can be provided as a combination of hardware and software components. The hardware components can be implemented in the form of a computer 1400, an example of which is described with reference to Fig. 14. Moreover, the software components of the controller 240 can be implemented in the form of one or more software applications.

Referring to Fig. 14, the computing device 1400 can have a processor 1402, a memory 1404, and I/O interface 1406. Instructions 1408 for running the one or more software applications can be stored on the memory 1404 and accessible by the processor 1402.

The processor 1402 can be, for example, a general-purpose microprocessor or microcontroller, a digital signal processing (DSP) processor, an integrated circuit, a field-programmable gate array (FPGA), a reconfigurable processor, a programmable read-only memory (PROM), or any combination thereof.

The memory 1404 can include a suitable combination of any type of computer-readable memory that is located either internally or externally such as, for example, random-access memory (RAM), read-only memory (ROM), compact disc read-only memory (CDROM), electro-optical memory, magneto-optical memory, erasable programmable read-only memory (EPROM), and electrically erasable programmable read-only memory (EEPROM), Ferroelectric RAM (FRAM), or the like.

Each I/O interface 1406 enables the computing device 1400 to interconnect with one or more input devices, such as optical phase change feedback sub-systems, or with one or more output devices such as the first and second optical phase change devices, a memory system, and/or a telecommunications network.

Each I/O interface 1406 enables the controller 240 to communicate with other components, to exchange data with other components, to access and connect to network resources, to server applications, and perform other computing applications by connecting to a network (or multiple networks) capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g., Wi-Fi, WiMAX), SS7 signaling network, fixed line, local area network, wide area network, and others, including any combination of these.

The computing device 1400 and the software layers described above are meant to be examples only. Other suitable embodiments of the controller 240 can also be provided, as will be apparent to the skilled reader.

As can be understood, the examples described above and illustrated are intended to be exemplary only. For instance, third, fourth, and other phase change devices can be coupled along different fiber portions of the optical fiber link. In these embodiments, each of the phase change devices has a respective response frequency range, and the response frequency ranges are complementary to one another so as to avoid unwanted phase slips. The optical phase change apparatus can be separate from the photonic FTQC system. In some other embodiments, an optical apparatus can be provided with the optical fiber link, the first phase change device, and the second phase change device. Accordingly, the controller may be omitted as this optical apparatus may be sold without the controller in some circumstances. The scope is indicated by the appended claims.

## Claims

1. An optical phase change apparatus comprising:
an optical fiber link along which an optical signal propagates;
a first phase change device coupled with a first fiber portion of the optical fiber link and configured for imparting a phase changing contribution to the first fiber portion via said coupling, the first phase change device operating within a first response frequency range;
a second phase change device coupled with a second fiber portion of the optical fiber link and configured for imparting a phase changing contribution to the second fiber portion via said coupling, the second phase change device operating within a second response frequency range, the second response frequency range having a maximum response frequency value greater than a maximum response frequency value of the first response frequency range; and
a controller communicatively connected to the first and second phase change devices, the controller configured for: upon determining that said optical signal experiences a given phase change including a given frequency value greater than the first response frequency range, instructing the first phase change device to impart, along the first fiber portion, a first phase change at a first response frequency value within the first response frequency range; and instructing the second phase change device to impart, along the second fiber portion, a second phase change at a second response frequency value within the second response frequency range and greater than the first response frequency range, the first and second phase changes corresponding to the given phase change.

2. The optical phase change apparatus of claim 1 wherein the second response frequency value is of at most about 40 GHz, preferably at most about 100 MHz and most preferably at most about 100 kHz.

3. The optical phase change apparatus of claims 1 or 2, wherein the first response frequency value is of at most about 160 Hz, preferably at most about 50 Hz and most preferably at most about 10 Hz.

4. The optical phase change apparatus of any preceding claim, wherein the first phase change device operates within a first phase range and the second phase change device operates within a second phase range, the first phase range greater than the second phase range, said first phase change imparted within the first phase range and said second phase change imparted within the second phase range.

5. The optical phase change apparatus of claim 4 wherein:
the first phase range is of at most fifty thousand π, preferably at most five hundred π and most preferably at most forty π; and
the second phase range is of at most one hundred π, preferably at most ten π and most preferably at most two π.

6. The optical phase change apparatus of any preceding claim wherein the second phase change device has a piezoelectric element mechanically coupled to the second fiber portion.

7. The optical phase change apparatus of any preceding claim wherein the first phase change device has a thermoelectric element thermally coupled to the first fiber portion.

8. The optical phase change apparatus of any preceding claim wherein the first phase change device has an electro-mechanical actuator mechanically coupled to the first fiber portion.

9. The optical phase change apparatus of any preceding claim, wherein the controller monitors a current phase signal indicative of a current phase of the optical signal, said instructing being based on said monitored current phase signal.

10. A method of changing a phase of an optical signal, the method comprising:
propagating the optical signal along an optical fiber link;
coupling a first fiber portion of the optical fiber link to a first phase change device, the first phase change device configured for imparting a phase changing contribution to the first fiber portion via said coupling, the first phase change device operating within a first response frequency range;
coupling a second fiber portion of the optical fiber link to a second phase change device, the second phase change device configured for imparting a phase changing contribution to the second fiber portion via said coupling, the second phase change device operating within a second response frequency range, the second response frequency range having a maximum response frequency value greater than a maximum response frequency value of the first response frequency range; and
upon determining that said optical signal experiences a given phase change including a frequency greater than the first response frequency range:
the first phase change device imparting, along the first fiber portion, a first phase change at a first response frequency value within the first response frequency range, and
the second phase change device imparting, along the second fiber portion, a second phase change at a second response frequency value within the second response frequency range and greater than the first response frequency range, the first and second phase changes corresponding to the given phase change.

11. The method of claim 10, wherein the second response frequency value is of at most about 40 GHz, preferably at most about 100 MHz and most preferably at most about 100 kHz.

12. The method of claims 10 or 11, wherein the first response frequency value is of at most about 160 Hz, preferably at most about 50 Hz and most preferably at most about 10 Hz.

13. The method of any of claims 10-12, wherein the first phase change device operates within a first phase range and the second phase change device operates within a second phase range, the first phase range greater than the second phase range, said first phase change imparted within the first phase range and said second phase change imparted within the second phase range.

14. The method of claim 13 wherein:
the first phase range is of at most fifty thousand π, preferably at most five hundred π and most preferably at most forty π; and
the second phase range is of at most one hundred π, preferably at most ten π and most preferably at most two π.

15. The method of any of claims 10-14, further comprising monitoring a current phase signal indicative of a current phase of the optical signal, said operating based on said monitored current phase signal.
